# EUROPEAN PATENT SPECIFICATION

(11) **EP 4 053 801 B1**
(45) Date of publication and mention of the grant of the patent: **24.12.2025**
(21) Application number: 22151107.4
(22) Date of filing: 12.01.2022
(51) Int. Cl.: G06V 10/82, G06V 10/25, G06V 20/56

(54) **LANDMARK LEARNING AND LOCALIZATION WITHOUT LABELS**
LANDMARKENLERNEN UND -LOKALISIEREN OHNE ETIKETTEN
APPRENTISSAGE DE POINTS DE REPÈRE ET LOCALISATION SANS ÉTIQUETTES

(30) Priority: 01.03.2021 EP 21160042
(43) Date of publication of application: 07.09.2022
(73) Proprietor: HONDA MOTOR CO., LTD., Tokyo 105-8404 (JP)
(72) Inventor: HARIS, Muhammad Dr., 60318 Frankfurt am Main (DE); FRANZIUS, Mathias Dr., 63073 Offenbach/Main (DE); BAUER-WERSING, Ute Prof.Dr., 60318 Frankfurt am Main (DE)
(74) Representative: Beder, Jens

(56) References cited:
- ISOBE SHOTA ET AL: "Learning Relationships Between Objects and Places by Multimodal Spatial Concept with Bag of Objects", 24 October 2017, ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 115 - 125, ISBN: 978-3-540-74549-5, XP047454455
- AKIRA TANIGUCHI ET AL: "Autonomous Planning Based on Spatial Concepts to Tidy Up Home Environments with Service Robots", ARXIV.ORG, CORNELL UNIVERSITY LIBRARY, 201 OLIN LIBRARY CORNELL UNIVERSITY ITHACA, NY 14853, 10 February 2020 (2020-02-10), XP081596953

## Description

The present invention relates to visual object and landmark detection, i.e., learning to detect and identify instances of a certain visual category in previously unseen imagery. More specifically, the invention relates to a system and method for generating detecting information for detecting a desired object or landmark in an image.

Visual object recognition and visual localization are central building block for mobile robots and other devices and services. Visual self-localization and mapping create a consistent representation of a robot's surroundings and localize it within the created map using a camera as the primary sensory input. A mobile robot's ability to localize itself in unknown scenes is one of the primary requirements for achieving intelligent behavior. It enables a range of indoor and outdoor applications ranging from household robots (i.e., lawnmowers, vacuum cleaners) to self-driving cars.

The research in visual localization and mapping encompasses a broad range of methods that address this challenging task. Several methods solve the localization and mapping problem simultaneously, i.e., SLAM (Simultaneous localization and mapping). State-of-the-art SLAM algorithms exploit image features or complete image information to create sparse or semi-dense scene representation.

In contrast, a range of methods create scene representations in an offline step and perform localization afterwards. In this category, various methods employ a 3D scene structure and estimate the precise 6D pose of a test image relative to a point cloud. Image retrieval algorithms match the 2D features of a test image to the 2D features from an image database and approximate its pose by retrieving the most similar database image. Another method uses frame-to-frame feature-based ego-motion estimation without temporal filtering for precise visual localization using a stereo camera. The use of convolutional neural networks (CNNs) for visual self-localization has become an appealing alternative to the traditional approaches based on hand-crafted features. The modularity of localization pipelines has allowed researchers to replace several pipeline's parts with CNN-based learning.

Other methods use features from pre-trained networks for the place recognition task and/or replaces the full localization pipeline with a CNN, wherein a neural network is trained in an end-to-end way to regress pose from single images directly. The learned features show robustness with respect to varying lighting and weather conditions. As an extension to it, a geometric loss function can be applied and the network can be used to achieve even higher localization accuracy.

While many of the methods mentioned above may provide precise visual localization, they lack semantic information of a scene. The recent performance increase of deep-learning based object detection algorithms has led the way to incorporate object detection into the traditional SLAM pipeline for creating semantically meaningful maps. Earlier work in this realm has extended the structure-from-motion (SfM) pipeline for joint estimation of camera parameters, scene points, and object labels. However, the slower run time limits the method to operate in real-time.

Other object-level SLAM methods use object detection in a scene to solve the problem of scale uncertainty and drift of monocular SLAM. An extensive database of known objects can be used and an algorithm based on bags of binary words. The combined usage of monocular SLAM and object recognition algorithms improves the map and finds its real scale. However, the main limitation of the approach is its dependence on known objects. Quadric SLAM is an object-oriented SLAM that does not rely on prior object models. Rather it represents the objects as quadrics, i.e., sphere and ellipsoids. It jointly estimates a 3D quadric surface for each object and camera position using 2D object detections from images. In another approach, inertial, geometric, and semantic information are incorporated into a single optimization framework and continuous optimization over the poses is performed while the semantic data association is discretely optimized.

In another method, generic objects are used as landmarks by including an object detector in a monocular SLAM framework and the CNN-based objects and plane detectors are used for constructing a sparse scene representation. The SLAM bundle adjustment includes semantic objects, plane structures, and their completed point clouds. Cube SLAM combines 2D and 3D object detection with SLAM pose estimation by generating cuboid proposals from single view detections and optimizing them with points and cameras using a multi-view bundle adjustment.

In another system, category-level models are created with CAD collections for real-time object-oriented monocular SLAM. Their developed rendering pipeline generates large amounts of datasets with limited hand-labeled data. The system first learns 2D features from category-specific objects (i.e., chairs, doors) and then matches the features to a CAD model to estimate the semantic objects' pose. For obtaining a metrically correct robot pose, the system then combines semantic objects and the estimated robot's pose from VO into an optimizing graph framework.

The finding of Place- and Head-Direction Cells to be involved in rodent localization ability has led to the creation of different bio-inspired methods for localization. Earlier learning approaches reproduce the firing characteristics of these cells using a hierarchical model. The model uses the concept of slow features analysis (SFA), and the intuition behind it is that behaviorally meaningful information changes on a slower timescale compared to the primary sensory input (e.g., pixel values in a video). The usage of holistic images and agent movement statistics in these models led to spatial representations similar to grid cells and place cells.

With an implementation of SFA-based localization on a robot using holistic views, similar localization performance can be achieved compared to state-of-the-art visual SLAM methods, i.e., ORB and LSD-SLAM in small-scale environments. However, recent experiments show that it does not scale well to larger environments.

A method for estimating probability of an object existing in a place using a multimodal spatial concept based on the co-occurrence of objects is disclosed in Shota Isobe et al.: "Learning Relationships Between Objects and Places by Multimodal Spatial Concept with Bag of Objects", 24 October 2017, Advances in Biometrics: International Conference on Social Robotics, ICB 2007, Seoul, Korea, 27 - 29 August 2007, Springer Berlin, Heidelberg, pages 115-125.

It is an object of the present invention to overcome the above-mentioned drawbacks and to provide an improved method for generating detecting information for detecting a desired object or landmark in an image. More specifically, it is an object of the invention to provide a method and system, with which detecting information for detecting a desired object or landmark in an image can be generated with low effort and costs, and which produces robust and useful detecting information.

This object is achieved by a method and system according to the enclosed independent claims. Advantageous features of the present invention are defined in the corresponding dependent claims.

According to the present invention, the computer implemented method for generating detecting information for detecting a desired object or landmark in an image comprises the steps of a) obtaining images including the desired object or landmark and a labeling object placed in a certain spatial relation to the desired object or landmark; b) obtaining labeling object information for detecting the labeling object in the obtained images and spatial relation information indicating the certain spatial relation between position and area of the labeling object in the obtained images and position and area of image regions including the desired object or landmark in the obtained images; c) detecting, in each of the obtained images, the labeling object based on the labeling object information; d) determining, in each of the obtained images, an image region including the desired object or landmark using information on position, and size of the detected labeling object in the image, and the obtained spatial relationship information and the detected labeling object to extract a plurality of determined image regions including the desired object or landmark as labeled training data; and e) generating the detecting information by training a neural network to detect the desired object or landmark without the labeling object in images using the extracted plurality of image regions as the labeled training data.

The detecting information can be a visual object/landmark classifier, a learned visual object/landmark detector or a model trained to detect the object/landmark in unknown scenes (areas) or its category, and can be added to other (pre-existing) detecting information of other objects, landmarks or categories. The pre-existing detecting information can include pre-trained objects, landmarks or categories that were trained by the method of the present invention and/or another method at an earlier point in time (previous learning process). In a next step, the detecting information alone or in combination with the pre-existing detecting information can be used to detect and identify objects or landmarks and/or their categories (e.g., a specific tree, a fountain, door, fork etc.) in previously unseen images or can be used in the mapping and localization phases of visual localization.

The image regions are used as training data to detect the desired object or landmark even if the labeling object is removed and is not in the image. With the invention, in the training phase each image region can be automatically detected with the labeling object, which must be placed only once, instead of manual labelling the region in hundreds or thousands of captured images, which is extremely time consuming and costly.

The spatial relation information can be set/stored by the manufacturer, (re)set by the user and/or can be automatically set by determining the certain spatial relation based on 3D scene information obtained from, for example, a stereo camera and/or laser scanner sensing the object and labeling object, or computed by structure-from-motion, and by assigning a spatial relation information to the determine spatial relation information based on a table. Alternatively or in addition, the user may be instructed to place the labeling object in a certain spatial relation to the object or landmark to be learned. The certain spatial relation may depend on the type (category) of the labeling object and/or the object/landmark.

The desired object or landmark and the labeling object can be located in an area (e.g., a garden, apartment, factory hall) and the images can be obtained by at least one camera at different camera positions with respect to the labeling object, at different camera orientations with respect to the labeling object, with different camera settings, with different focal lengths and/or at different times.

The camera can be a wide field of view camera, or even an omnidirectional camera. In particular, when several desired objects and/or landmarks of the area are to be learned, the wide field of view camera allows to detect labeling objects from more locations in the area than a small field of view camera/sensor.

The camera can be operated by the user, or a robot or a vehicle moves the camera in the area to generate the images automatically, for example during its work (lawn mowing, cleaning).

The generated detecting information can be evaluated and, if necessary, adjusted to improve visual object/landmark detection or visual localization. For this purpose, the method can comprise the steps of:
- localizing the robot or the vehicle in the area based on the detecting information;
- determining a localization accuracy of the robot; and at least one of
- repeating the steps a) to e) if the determined localization accuracy is lower than a preset minimal accuracy; and
- generating a signal instructing a user or a device to place, in the area, another labeling object in the certain spatial relation to another desired object or landmark if the determined localization accuracy is lower than the preset minimal accuracy.

The localization accuracy may vary in some regions of the area, especially if the number of learned objects or the visibility conditions in the regions are different, so that accuracy only needs to be increased in certain regions. For this purpose, a region of the area, in which the determined localization accuracy is lower than the preset minimal accuracy can be determined, wherein the robot or the vehicle is controlled to move to the region and the steps a) to e) are repeated after the robot or the vehicle is within the region and/or the signal instructs the user or the device to place the other labeling object in the region.

Alternatively or in addition, a signal instructing the user or the device to remove the labeling object from the area or the region can be generated if the determined localization accuracy is not lower than the preset minimal accuracy.

In particular, for visual localization, the desired object or landmark is preferably immobile, while the labeling object may be transportable. Preferably, the labeling object can be a person (i.e., user) standing next to the desired object and/or pointing to the desired object, wherein the labeling object information includes information for detecting a person pointing at something, the spatial relation information includes information for determining a pointing direction of the person and the image region is determined based on the pointing direction.

The image region including the desired object or landmark is determined based on the spatial relation information and the labeling object detected in the image, wherein the spatial relation information can indicate a 2D relationship between the labeling object and the image region, i.e., a fixed pixel offset between a certain pixel of the labeling object and the center of the image region in the direction of the upper edge of the image.

Alternatively, if 3D scene information is available as described above, the image region including the desired object or landmark well can be determined more precisely, even if the camera positions differ and/or a person points to the desired object. For this purpose, the method comprises the step of obtaining 3D information indicating three-dimensional position and/or spatial extension of at least the labeling object included in the respective image, wherein the spatial relation information includes information for calculating three-dimensional offset between the labeling object and the image region based on the three-dimensional position and/or spatial extension and the image region is determined based on the three-dimensional offset.

Alternatively or in addition, a bounding box of the labeling object detected in the image can be generated and the position and/or size of the image region can be set based on a position and/or size of the bounding box of the detected labeling object. Since the size of objects in the image depends on the zoom factor and distance between the camera and the objects, width and height of the image region can be calculated from the width and height of bounding box using a certain factor, wherein the center of the image region can be determined by adding a fixed pixel offset in a certain direction to the center of the bounding box. The spatial relation information can include information (e.g., the factor, offset, direction) for determining a position and/or size of the image region based on a position and/or size of the determined bounding box.

The labeling object can be used to identify one desired object or landmark in the image. Alternatively, multiple desired objects or landmarks can be marked by a single labeling object, wherein the labeling object is placed in a certain spatial relation to multiple desired objects or landmarks (e.g., between two desired objects), the spatial relation information indicates the certain spatial relation to each desired object or landmark, the image region is determined for each desired object or landmark so that multiple image regions are determined in each of the obtained images and the detecting information is generated for each desired object or landmark. In this way, multiple desired objects or landmarks per labeling object can be learned. This improves robustness against local occlusions, and reduce noise in the localization step due to redundancy. Furthermore, if multiple regions are learned with a known offset from one labeling object, the location of the occluded labeling object can be easily estimated, and thus a localization method relying on the original labeling objects as landmarks can continue operating just as if there was no occlusion.

The labeling object can be assigned to one of a plurality of object categories, wherein the object category is determined in the detecting step. In addition, different positions and/or sizes of the image region can be assigned to different object categories, wherein the spatial relation information includes information (e.g., a table) for determining a position and/or size of the image region based on the determined object category. In this way, the user can adapt the position and/or size of the image region by selecting a labeling object of a respective category.

The labeling object can be detected by YOLO (You only look once) object detection. For example, a bicycle as the labeling object can be placed below tree (desired object) and a lawn mower robot can be used to take hundreds or millions of images in the garden, wherein an existing bicycle detector from available YOLO model trained on MS-COCO (Microsoft Common Objects in Context) database detects the bicycle in images. The user now only needs to indicate the spatial relation of the bicycle relative to a region containing the tree once or a few times to generate training data for this tree as a landmark from all recorded images. Finally, the bicycle can be removed from the scene. In this way, the robot uses a model trained to detect the tree landmark for localization without a lot of human effort and without the need for a permanent new marker in the scene (like the bicycle or an AR marker). Since the detector has been learned on this specific instance of a tree, it is very specific and will detect this one tree only, and none of possible other trees in the scene. In contrast, even if a generic "tree detector" were available, it could not differentiate between the one unique landmark and other trees.

According to the present invention, the system for generating detecting information for detecting a desired object or landmark in an image is configured to carry out the method as outlined above.

The invention will now be explained in more detail with reference to the accompanying drawing, wherein:
- FIG. 1: shows a vehicle comprising a system according to an embodiment of the present invention,
- FIG. 2: shows a flowchart of the method according to an embodiment of the present invention,
- FIG. 3: shows functional components of the computer contained in the vehicle shown in FIG. 1,
- FIG. 4: shows a diagram (a) of simulated training- and test-trajectories with random traversal and a diagram (b) of simulated training- and test-trajectories with grid positions,
- FIG. 5: shows a table I illustrating the mean and median localization performance of Landmark-based and Holistic SFA, a table II illustrating the localization performance on the test sets of both gardens for generalization over time and a table III illustrating the localization performance when the train and test sets consist of images from different robot trajectories,
- FIG. 6: shows in a diagram an effect of scaling sub-image regions on localization, and
- FIG. 7: illustrates an experimental setup.

The same features are denoted by the same reference signs throughout all figures.

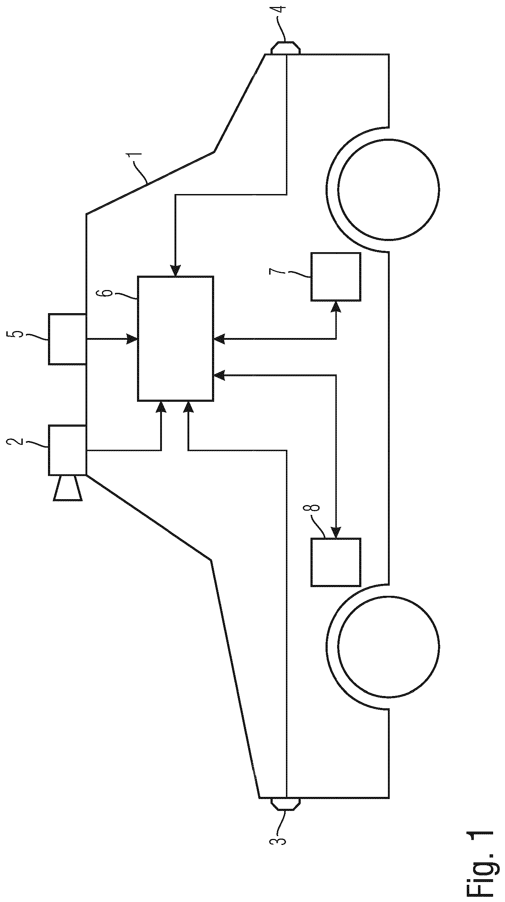

FIG. 1 shows a side view of a vehicle 1, equipped with the inventive system for generating detecting information for detecting a desired object or landmark in an image. The generated detecting information represents a detector for landmark detection, which is used in the mapping and localization phases to create a consistent representation (map) of the vehicle's surroundings and localize it within the created representation using a camera 2 as the primary sensory input. The vehicle 1 may be any type of vehicle including, but not limited to, cars, trucks, motorcycles, busses, and reacts to surrounding objects, such as persons (pedestrians), other vehicles and obstacles (stones, walls, trees, bushes). Alternatively, mobile robots, especially service robots such as lawn mowers, cleaning robots, household robots, delivery robots (industrial or construction site) can be equipped with the inventive system.

In FIG. 1, a front radar 3, a rear radar 4 and the camera 2 sensing the environment around the vehicle 1 are mounted on a front surface of the vehicle 1, a rear surface of the vehicle 1, and the roof of the vehicle 1, respectively. The camera 2 is positioned to monitor an area in front of the vehicle 1. Preferably, the camera 2 is a wide field of view camera or even an omnidirectional camera, as it allows to detect objects from more locations in the environment of the vehicle 1 than a small field of view camera/sensor. Alternatively or in addition, a stereo camera system, a camera system, with which a 360° surveillance around the ego-vehicle 1 is possible, and/or lidar sensors can be mounted on the vehicle 1. A position sensor 5, e.g., a GPS navigation device, is mounted on the vehicle 1 and detects the position of the vehicle 1. The system further comprises a computer 6 that receives or acquires the signals from the camera 2, the front radar 3, the rear radar 4 and the position sensor 5 and controls a drive unit (motor) 7 and steering unit 8 in autonomous or partially autonomous driving. The computer 6 further receives signals from sensors (not shown) of the drive unit 6 and the steering unit 7 indicating wheel speed and steering angle to estimate change in position over time by odometry.

The system is capable of sensing the environment around the vehicle 1 and providing information for performing autonomous driving. In order to do so, the vehicle 1 is equipped with the camera 2 for visual recognizing objects and landmarks in the environment of the vehicle 1 using a pre-trained object detector, e.g., YOLOv₃, which is a fast and accurate real-time object detector.

The object detector detects special immobile objects or regions, i.e., landmarks. Some typical landmarks and objects can be anticipated and incorporated at production time, but not all object types and appearances can be known a priori, e.g., for a lawn mower robot. New objects or landmarks can be learned to achieve even higher localization accuracy. However, state of the art methods for learning require extensive and time-consuming manual labelling of images to indicate where the object or landmark is located in the image.

According to the invention, the vehicle 1 is configured to autonomously learn new visual landmarks using the pre-trained object detector and at least one of its pre-trained/known objects as a labeling tool (labeling object) indicating a new object or landmark of the environment. The physical labeling object is placed in a certain spatial relation to the new object or landmark to be learned and the computer 6 detects the labeling object in each image obtained by the camera 2 and determines, in each image, an image region that is very likely to include the new/desired object or landmark based on the position of the labeling object in the image and the known spatial relation. The image regions extracted from the images are labeled data for learning the new object or landmark, wherein the computer 6 generates the detecting information (e.g., new visual classifier, adapted/tuned YOLOv₃ detector) by training a neural network to detect the desired object or landmark using the labeled data as training data. This approach provides a way to quickly and efficiently generate labeled data without requiring hand labeling in the images, wherein multiple new objects or landmarks in a scene/environment can be labeled and learned.

The learning process can be initiated by the user or the vehicle if the localization accuracy is lower than a preset minimal accuracy, wherein the vehicle 1 may ask the user to temporarily place a labeling object of a known class in the scene and optionally to indicate once which region relative to the labeling object to use. Alternatively, a robot or a drone can be controlled to place the labeling object.

The labelling object can be placed in a predefined spatial relationship to the new object or landmark, e.g., left or right next to it, below or above the new object or landmark, so that the image region (region of interest, ROI) is automatically set to right or left next to the labelling object, or above or below the labelling object. In addition, the spatial relationship can be selected depending on the type/category of the labelling object, e.g., when the labelling object is a sun umbrella, ROI is below the labelling object and when the labelling object is a car or bicycle, ROI is above the labelling object.

The manufacturer or user can set the spatial relationship by storing/entering data (pointing direction, distance/offset, relative size and/or type). Alternatively, the user can indicate in one or few images where the ROI to be extracted is relative to a detected labelling object (e.g., directly above, between to labelling objects, etc.) as a 2D or 3D offset in one image or other scene representation. This approach can yield semantically meaningful object categories (e.g., a specific tree, a fountain, door etc.). If the labelling object is placed such that the camera 2 can go around it, a simple 2D offset may fail and not capture a semantically meaningful region but a subset of the scene's "viewing space", i.e. some limited and well-defined camera positions at certain orientations. Some localization approaches (especially those based on pose regression and not depending on a fixed geometric 3D position of a landmark) can cope with this case and be used for localization.

Alternatively or in addition, the computer 6 can detect the ROI(s) by detecting regions with high objectness property, i.e. a region likely to contain one full object in one image and deduce the relative 2D offset to the new object/landmark, or analyze the regions around the labelling object and choose a region that is more or most visually unique (e.g., not a section of brick wall from a larger brick wall).

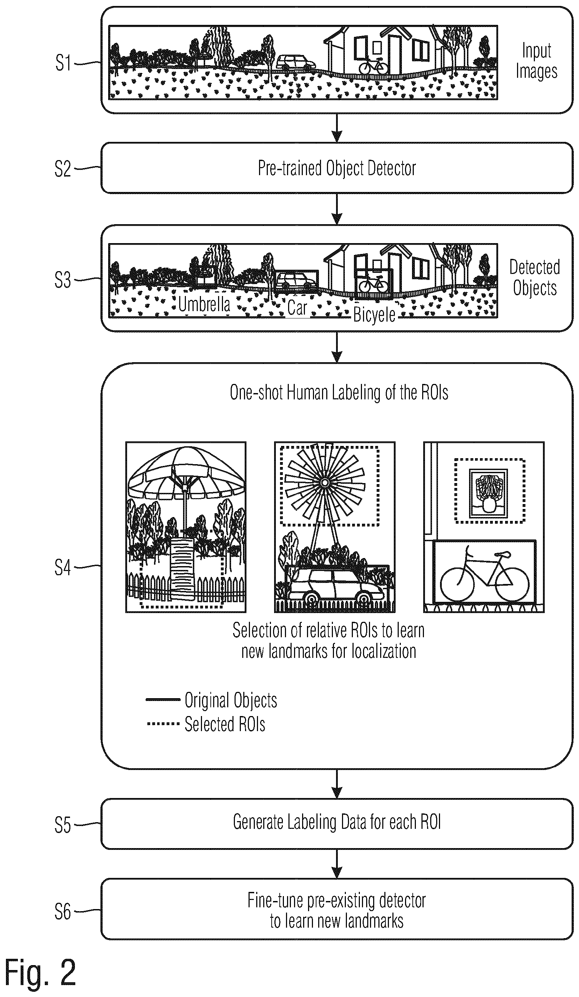

Fig. 2 shows the steps performed by the computer 6 to learn three new visual landmarks in a garden (area), i.e., a fire hydrant, a wind wheel and a painting on the building wall. In the garden, an umbrella is positioned above the fire hydrant, a car is positioned below the wind wheel and a bicycle is positioned below the painting. The umbrella, car and the bicycle, which are pre-trained convolutional neural network (CNN) objects, can be placed by the user just to learn the new visual landmarks or they can be pre-existing objects.

In step S1, images collected by the camera 2 are obtained. The images are collected in an exploration phase, in which the vehicle 1 traverses the garden. A pre-trained object detector (e.g., YOLOv3) for detecting the umbrella, the car and the bicycle is used in step S2. In step S3, the umbrella, the car and the bicycle are detected in the images by the object detector. In step S4, the computer 6 obtains spatial relation information indicating the spatial relations between the detected (labelling) objects and the respective ROI. For this, one or few images, in which the umbrella, the car and the bicycle example are marked by a respective bounding box, are displayed and the user selects the respective ROI as indicated by the dotted lines in Fig. 2. This user interaction is performed using a user interface of the vehicle 1 or an external user interface (e.g., smartphone, tablet), to which the vehicle 1 is connectable. In step S5, the computer 6 automatically determines ROIs in all images based on the spatial relation information and generates labeled data for each ROI. In step S6, the computer 6 fine-tunes a pre-trained YOLOv3 to recognize the new landmarks. This step's output is a custom landmark detector, which can be used as an independent module in the mapping and localization phases. The labeling objects (umbrella, car and bicycle) are only required temporarily and can be optionally removed afterwards, e.g., after the images are collected.

After landmark learning, the vehicle 1 uses the learned landmarks for mapping and localization phases, wherein a four-layer hierarchical SFA network can be used. The network learns spatial representations relative to each landmark in an unsupervised learning process (mapping). To quantify the model performance, projection from SFA to metric space by computing a regression function from the learned SFA representation and odometry data can be performed, i.e., the vehicle's ground truth position (x; y). This step is only required to evaluate the method's localization performance using traditional metric measurements. In the localization phase, the computed regression function can be applied to the SFA output of a landmark image in the test set to estimate the vehicle's 2D position (x; y) relative to it. Finally, the global 2D position (x; y) of a test image can be obtained by combining each landmarks' position estimate using weighted averaging.

Instead of using existing object detectors (e.g., YOLO) and object categories from existing image training sets (like MS-COCO), labelling objects could also be fiducial markers (e.g., AR markers or other artificial markers), which are optimized for detectability. While such markers are not typically available in households, they may be useful in professional or industrial settings (e.g. for a gardener setting up lawnmower robots in customer gardens or for training landmarks in a factory with temporary AR markers).

The basic implementation of the method shown in Fig. 2 assumes unique landmark objects, i.e., at most one object of one type in an environment (e.g., one instance of category "bicycle"). Otherwise, without further steps, a mixture of regions relative to each instance of such a non-unique landmark may be learned, leading to a non-localized landmark, which may break subsequent localization steps. Optionally, the uniqueness of each anchor object may be guaranteed by a human operator. Alternatively, the uniqueness may be not necessary. If information on the position of the vehicle 1 is available during landmark learning from the position sensor 5, odometry, and/or structure-from-motion, the position of labelling object can be estimated for each detection and non-unique landmarks could be dismissed and/or the user could be warned and/or asked to remove objects. Alternatively, individual detected instances at distinct locations could be separated by their location and thus made unique, i.e., a separate landmark region can be learned relative to each detected labelling object. Alternatively, nonunique landmarks may be acceptable if the subsequent localization step can cope with nonunique landmarks (e.g., some variants of Slow Feature Analysis based localization systems, especially if each landmark instance is tracked over time). Alternatively, nonunique regions (landmarks) may be automatically separated, because of distinct appearance of each instance (e.g., by color: two cars are detected in a scene, one blue and one red; a clustering by color could separate the instances) or of the object instance's background (e.g., one car parked in front of a bush and one in front of a brick wall).

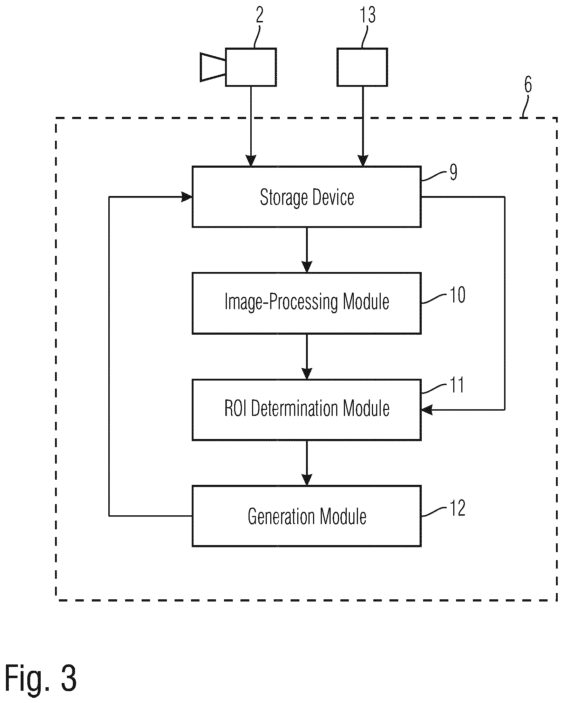

Fig. 3 illustrates functional components of the computer 6. As a specific example, an already existing computer 6 or processor used for processing signals of a drive control may be configured to implement the functional components described and discussed below. The computer 2 comprises a database 9, an image-processing module 10, a ROI determining module 11 and a generating module 12 for generating the detecting information (object detector). The database 9 stores labeling object information and spatial relation information that are received by an input module 13 (e.g. transceiver, USB flash drive or another computer) and the images collected by the camera 2. The image-processing module 10 obtains the images and the labeling object information from the database 9 and detects the labelling objects in the images. The ROI determining module 11 obtains the spatial relation information from the database 9, obtains the images and information on the detected labelling objects (position, type, size) from the image-processing module 10 and determines ROIs in the images based on the information. The generating module 12 generates the detecting information by training a neural network to detect new objects/landmarks using the ROIs obtained from the ROI determining module 11 and stores the detecting information in the database 9. The detecting information is read out by a visual localization module of the computer 6 (not shown) and/or by a visual localization module/computer of another vehicle. Alternatively, a stationary device comprising the computer 6 shown in Fig. 3 can generate the detecting information, wherein the images collected by the camera 2 are transferred to the stationary device and the generated detecting information are transferred to the vehicle 1 and/or the other vehicle for visual localization. Alternatively or in addition, the stationary device or the computer 6 can generate the spatial relation information, wherein the user specifies in an image stored in the database 9 where the ROI to be extracted is located and the stationary device or the computer 6 determines, in the image, 2D or 3D offset between the position/area of the ROI specified by the user and the position/area of the labelling object detected by the image-processing module 10.

The functions of the modules described herein may be implemented using individual hardware circuitry, using software functioning in conjunction with a programmed microprocessor or a general purpose computer, using an application specific integrated circuit (ASIC) and/or using one or more digital signal processors (DSPs).

The new approach employs, for example, state-of-the-art CNN to detect unique image regions and learns spatial representations relative to them. The results show a significant improvement in localization accuracy, especially in a large-scale environment. The label generation process uses physical object instances with pre-existing visual detectors (e.g., MS-COCO objects) as a labeling tool for learning new landmarks for localization. Such known objects are placed in spatial relation (e.g., next to) a yet-to-be-learned landmark, or if such objects are already in the environment, this step is optional. This process allows efficient and fast generation of labeled training data compared to the cumbersome hand labeling.

Hereinafter, experiments in a simulated environment for the proof-of-concept, the localization performance on newly learned CNN landmarks and the experimental results are described.

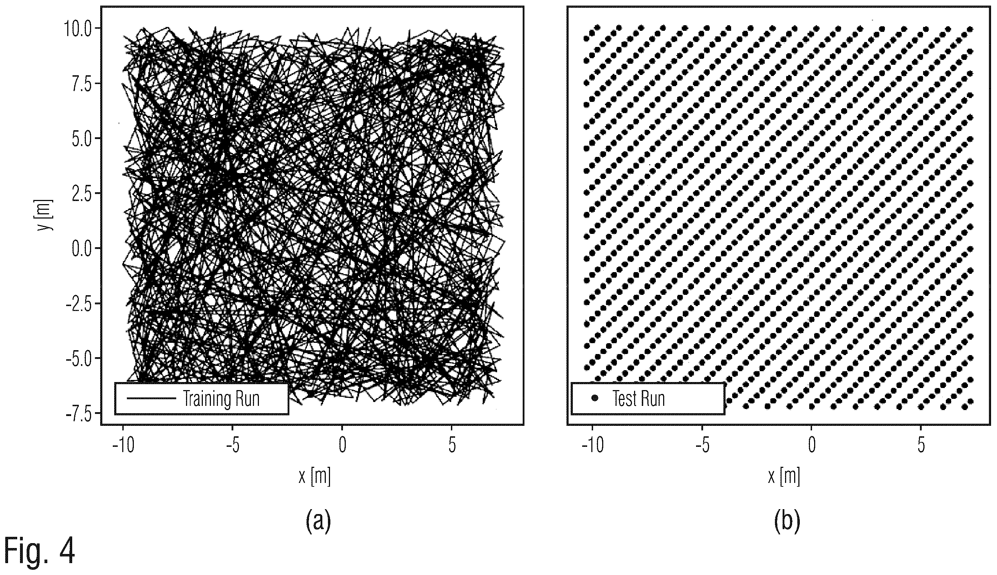

The experiments are performed in a simulated garden that has an area of size 18 x 18 meters. A virtual robot randomly traverses the area to record images for training set while it moves along fixed positions on a regular grid (Fig. 4, diagram a) to collect the test set (Fig. 4, diagram b). Images are projected from the simulated camera to panoramic views of size 3600 x 600 pixels. The training and test trajectory consist of 15000 and 1250 images, respectively.

In the simulated experiments, three anchor objects are used to learn new landmarks for localization. The objects include a car (Id 0), a fire hydrant (Id 1), and a bicycle (Id 2). The labeling procedure starts with processing the images using a pre-trained object detector to obtain these objects' instances. The next step involves specifying the spatial relation of the new landmark with respect to a labeling object (anchor object).

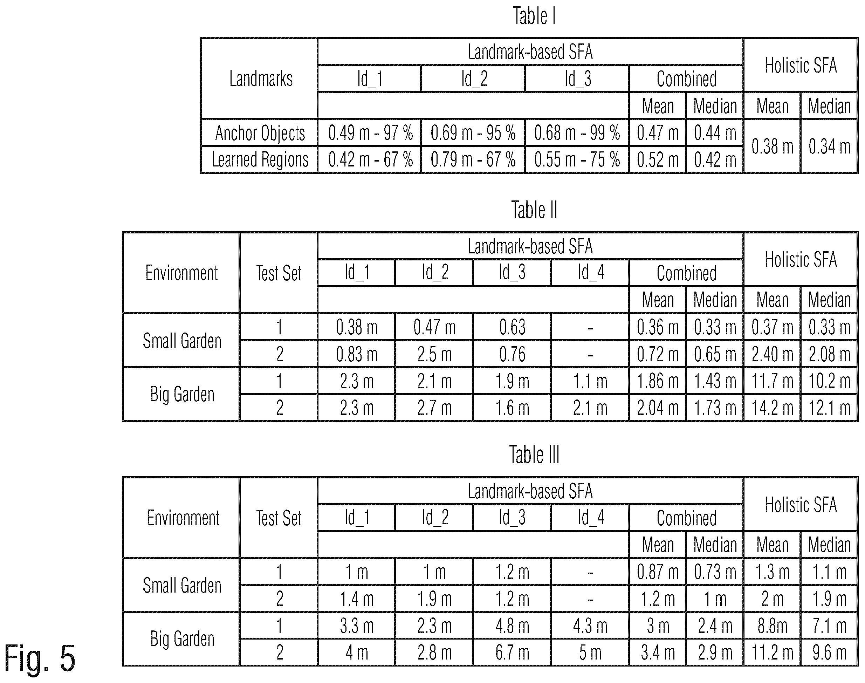

The top region of anchor objects is chosen for learning as landmarks. Based on this specification, the following step automatically generates the labeled data and fine-tunes the existing detector to learn these new landmarks. After the landmark learning phase, the final step uses the learned landmarks and performs SFA localization relative to them. Table I in Fig. 5 shows the experimental results of localization with respect to anchor objects, learned landmarks, and holistic images as a baseline. This table presents the Mean and Median localization performance of Landmark-based and Holistic SFA. It also reports detection rates, localization accuracies on individual objects or regions, and their combination. First, the actual anchors are used for localization and later their derived learned regions. The localization on learned regions achieves a comparable accuracy than anchor-based and Holistic SFA.

The anchor objects are removed from the scene while performing localization with respect to learned landmarks. Table I reports the detection rates, localization accuracies for each landmark, and their combination. Despite the reduction in the learned landmarks' detection rates, it achieves similar localization performance compared to anchor-based and holistic SFA.

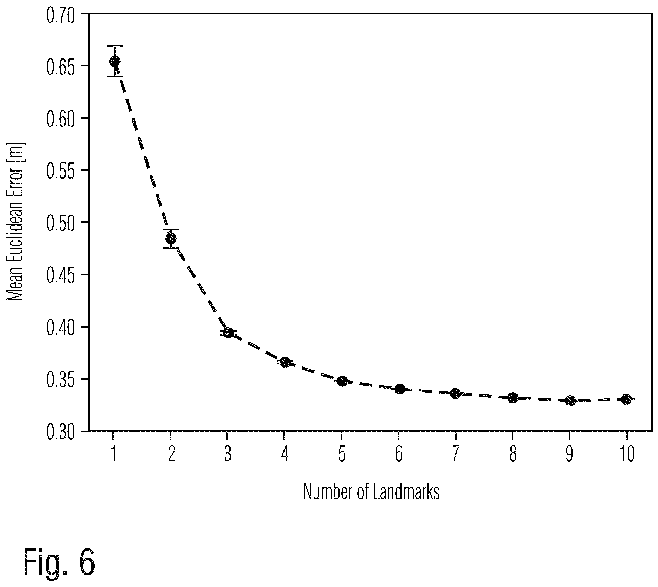

Effect of an Increasing Number of Landmarks on Localization: This experiment aims to estimate the effect of increasing the number of landmarks on localization, wherein 10 landmarks are used for this task. The first step learns an independent SFA model for each landmark. The second step processes landmark images from the test set using the associated models to compute the SFA output. The final step maps each SFA output to a metric 2D position (x; y) with the procedure described above. Afterwards, the test set's mean localization error is calculated by systematically increasing the landmarks. Fig. 6 shows in a diagram the results of 50 random permutations of the 10 landmarks. The plot initially shows a significant performance gain by increasing the number to three. The addition of more landmarks continues to improve the overall localization performance until it saturates as expected. From an application perspective, this implies that a robot could, at runtime, and depending on the area where high accuracy is required, increase the number of regions and find a reasonable trade-off between computation and accuracy.

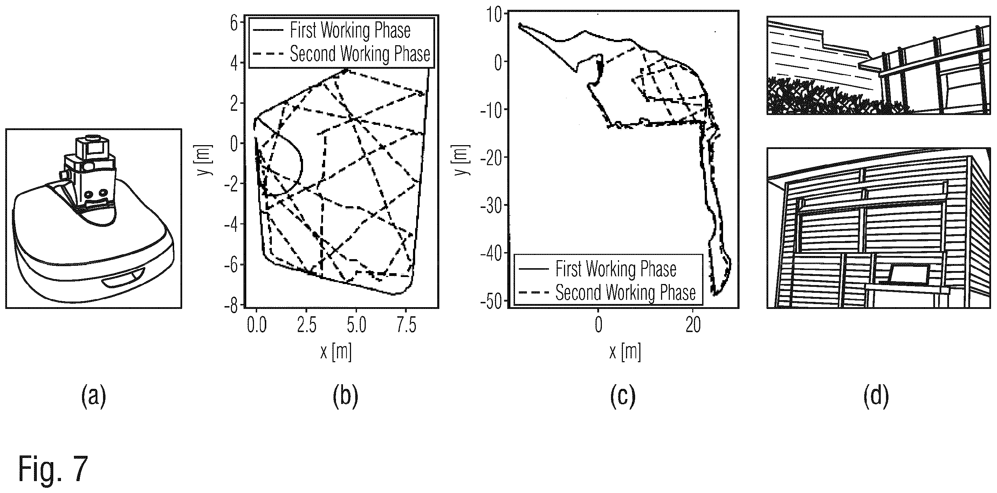

In the Real-World Experiments, the experiments are performed in two garden-like outdoor areas that differ with respect to size and topology. Fig. 7 shows the experimental setup: (a) An autonomous lawn mower robot with a fisheye camera used for the experiments. (b) and (c) show the robot's traversed trajectories in one of the recording sessions from both gardens, respectively. The solid line (red) shows the robot's traversal in the first working phase (border run), while the dashed line (blue) shows its traversal in the second phase (infield run). (d) previously trained custom objects (e.g., hut) or regions (e.g., building corner) are used as anchors to learn new relative landmarks for the real-world experiments.

The area of the two gardens is 88m² and 494m², respectively. An autonomous lawn mower robot as shown in Fig. 7 (a) is used. The robot is equipped with an upright fisheye lens to capture an environment's view of size 2880 x 2880 pixels. Each recording session has two working phases. In the first phase, the robot traverses the border of an area by using the standard wire guidance technology, while in the second phase, it moves freely within the area defined by the border wire. Fig. 7(b) and 4c show the robot's traversed trajectories in one of the recording sessions from both gardens, respectively. During each recording, the robot stores images and the associated odometry information. For the first working phase, we estimate the robot's ground truth metric position (x; y) using a method described by N. Einecke, K. Muro, J. Deigmöller, and M. Franzius, "Working area mapping with an autonomous lawn mower," in Conference on Field and Service Robotics, Springer, September 2017. In the method, wheel odometry and additional weighted loop closure are used to get high-quality localization. However, the technique only estimates the metric shape of the boundary. For the second working phase, the ground truth data (x; y) is estimated using commercial photogrammetry software, i.e., Metashape (https://www.agisoft.com/). The obtained ground truth position (x; y) estimates are used to evaluate the metric performance of the localization methods. Instead of using MS-COCO objects, pretrained scene-specific unique objects or regions are used as anchors to learn new sub-image regions for localization as shown in Fig. 7 (d). The experimental results using 10 different recordings collected from both gardens under varying lighting changes, weather conditions, and dynamic obstacles are provided. The following subsections present the experimental results for temporal and extreme spatial generalization from both gardens to test the methods' strength.

Temporal Generalization: This experiment aims at testing the re-localization ability of the methods in changing environmental conditions over time. Here, it is chosen that the robot traverses on a similar path (border run) and collected three different recordings from each garden. One dataset from each garden's recordings is used to learn the spatial representations and the other two independent sets to test the localization performance. The datasets differ with respect to dynamic scene variations and changes in lighting conditions. Table II shown in Fig. 5 refers to real-world experiments for temporal generalization and shows the localization performance on the test sets of both gardens for generalization over time. It reports mean and median Euclidean errors for individual image regions, their combination, and Holistic-SFA. Sub-image regions enable coarse localization in both environments while their combination outperforms Holistic-SFA and reports mean and median localization performance based on each sub-image region, their combination, and holistic images. The results based on individual sub-image regions show the possibility of enabling coarse localization in an environment. Nevertheless, their combined performance outperforms Holistic-SFA on both gardens' test sets. However, the effects are more pronounced for the large-scale environment.

Spatial Generalization: This experiment aims at testing the re-localization ability of the methods when the train and test set contain sufficiently different robot trajectories. As described earlier, each robot recording session has two operational phases. Hence, the images from the first phase (border run) are used to learn the spatial representations and the images from the second phase (infield run) are used to test the localization method. Two recordings are collected from both gardens for the experiments. Table **III** shown in Fig. 5 refers to real-world Experiments for spatial generalization and shows the localization performance when the train and test sets consist of images from different robot trajectories. It reports mean and median Euclidean errors for individual image regions, their combination, and Holistic-SFA. Similar to temporal generalization experiments, the Landmark-based SFA's combined performance outperforms Holistic-SFA in both environments, and reports mean and median localization performance based on each sub-image region, their combination, and holistic images. The individual regions again show coarse localization performance. However, it is slightly worse for specific regions (Id 3, Id 4) of the big garden. Extreme perspective changes between the train and test images mainly influence this performance drop. Moreover, there is a noticeable change in the lighting conditions between the first and second robot recording phases. Despite that, their combination achieves similar or better performance than Holistic-SFA on the test sets. There are several ways to improve further the current results of Landmark-based SFA. Firstly, the scaling experiments suggest that incorporating more sub-images regions leads to a higher localization accuracy. Secondly, it is possible to filter out the regions with the worst performance as a postprocessing step and only perform localization relative to the regions that have mean performance less than a specified threshold. Thirdly, the addition of sparse images from infield run during learning can further improve the localization performance.

Thus, there is a new approach that aims to speed up the label generation process for learning new landmarks with a minimal labeling effort by a human. The method uses physical instances of pre-trained CNN objects as anchors to generate labeled data for the unseen imagery. A human only needs to specify the new landmarks' spatial relationship with respect to the detected objects in one or a few images. Afterwards, the system automatically generates the labeled data and fine-tunes the detector to learn the landmarks. Then the learned landmarks and shown localization results relative to them are used. The results show good localization performance compared to the holistic images, especially in a large-scale outdoor environment. The method's performance can be significantly improved by integrating more of such landmarks and obtaining a global position estimation relative to them. The new landmarks may not necessarily contain complete objects, it can be a random patch. As long as the random patch is informative (i.e., not a part of a sky), it is possible to learn spatial representations relative to that using SFA. Further, suitable landmarks can be used for localization only while discarding the rest as a post-processing step. From an application perspective, the system is suitable for service robots (e.g., lawnmowers and vacuum cleaners), employing a pre-trained visual detector to learn new landmarks in a scene. Thus, the approach enables reliable localization in the long-term even if the anchor objects are no longer present in the scene.

## Claims

1. A computer implemented method for generating detecting information for detecting a desired object or landmark in an image, comprising the steps of:
a) obtaining (S1) images including the desired object or landmark and a labeling object placed in a certain spatial relation to the desired object or landmark;
b) obtaining (S2, S4) labeling object information for detecting the labeling object in the obtained images and spatial relation information indicating the certain spatial relation between position and area of the labeling object in the obtained images and position and area of image regions including the desired object or landmark in the obtained images;
c) detecting (S3), in each of the obtained images, the labeling object based on the labeling object information;
d) determining (S5), in each of the obtained images, an image region including the desired object or landmark using information on position, and size of the detected labeling object in the image, and the obtained spatial relationship information to extract a plurality of determined image regions including the desired object or landmark as labeled training data; and
e) generating (S6) the detecting information by training a neural network to detect the desired object or landmark without the labeling object in images using the extracted plurality of image regions as the labeled training data.

2. The method according to claim 1, wherein
the images are obtained by at least one camera (2) at different camera positions with respect to the labeling object, at different camera orientations with respect to the labeling object, with different camera settings, with different focal lengths and/or at different times.

3. The method according to claim 1 or 2, wherein
the desired object or landmark and the labeling object are located in an area and the at least one camera (2) is moved by a robot or a vehicle (1) in the area.

4. The method according to claim 3, further comprising the steps of:
localizing the robot or the vehicle (1) in the area based on the detecting information;
determining a localization accuracy of the robot or the vehicle (1); and at least one of
repeating the steps a) to e) if the determined localization accuracy is lower than a preset minimal accuracy; and
generating a signal instructing a user or a device to place, in the area, another labeling object in the certain spatial relation to another desired object or landmark if the determined localization accuracy is lower than the preset minimal accuracy.

5. The method according to claim 4, wherein
in the step of determining the localization accuracy, a region of the area, in which the determined localization accuracy is lower than the preset minimal accuracy is determined;
the robot or the vehicle (1) is controlled to move to the region and the steps a) to e) are repeated after the robot or the vehicle (1) is within the region; and/or
the signal instructs the user or the device to place the other labeling object in the region.

6. The method according to claim 4 or 5, further comprising the step of:
generating a signal instructing the user or the device to remove the labeling object from the area or the region if the determined localization accuracy is not lower than the preset minimal accuracy.

7. The method according to anyone of preceding claims, wherein
the labeling object is transportable and the desired object or landmark is immobile.

8. The method according to anyone of preceding claims, wherein
the labeling object information includes information for detecting (S3) a person pointing at something;
the spatial relation information includes information for determining a pointing direction of the person; and
the image region is determined (S5) based on the pointing direction.

9. The method according to anyone of preceding claims, further comprising the step of:
obtaining 3D information indicating three-dimensional position and/or spatial extension of at least the labeling object; wherein
the spatial relation information includes information for determining three-dimensional offset between the labeling object and the image region based on the three-dimensional position and/or spatial extension; and
the image region is determined (S5) based on the three-dimensional offset.

10. The method according to anyone of preceding claims, further comprising the step of:
determining (S3) a bounding box of the detected labeling object, wherein
the spatial relation information includes information for determining (S5) a position and/or size of the image region based on a position and/or size of the determined bounding box.

11. The method according to anyone of preceding claims, wherein
the labeling object is placed in a certain spatial relation to multiple desired objects or landmarks;
the spatial relation information indicates the certain spatial relation to each desired object or landmark,
the image region is determined (S5) for each desired object or landmark so that multiple image regions are determined in each of the obtained images; and
the detecting information is generated (S6) for each desired object or landmark.

12. The method according to anyone of preceding claims, wherein
the labeling object is assigned to one of a plurality of object categories; and
the object category is determined in the detecting step (S3).

13. The method according to claim 12, wherein
the spatial relation information includes information for determining a position and/or size of the image region based on the determined object category.

14. The method according to any one of preceding claims, wherein
the labeling object is detected by YOLO object detection.

15. A system for generating detecting information for detecting a desired object or landmark in an image configured to carry out the method according to anyone of claims 1 to 14.

## Patentansprüche

1. Computerimplementiertes Verfahren zum Erzeugen von Erkennungsinformationen zum Erkennen eines gewünschten Objekts oder einer gewünschten Landmarke in einem Bild, das die folgenden Schritte aufweist:
a) Erhalten (S1) von Bildern, die das gewünschte Objekt oder die gewünschte Landmarke und ein Beschriftungsobjekt beinhalten, das in einer gewissen räumlichen Beziehung zu dem gewünschten Objekt oder der gewünschten Landmarke platziert ist;
b) Erhalten von (S2, S4) Beschriftungsobjektinformationen zum Erkennen des Beschriftungsobjekts in den erhaltenen Bildern und von räumlichen Beziehungsinformationen, die die gewisse räumliche Beziehung zwischen Position und Bereich des Beschriftungsobjekts in den erhaltenen Bildern und Position und Bereich von Bildregionen, die das gewünschte Objekt oder die gewünschte Landmarke in den erhaltenen Bildern enthalten, angeben;
c) Erkennen (S3), in jedem der erhaltenen Bilder, des Beschriftungsobjekts auf der Grundlage der Beschriftungsobjektinformationen;
d) Bestimmen (S5), in jedem der erhaltenen Bilder, einer Bildregion, die das gewünschte Objekt oder die gewünschte Landmarke enthält, unter Verwendung von Informationen über die Position und Größe des erkannten Beschriftungsobjekts im Bild und der erhaltenen räumlichen Beziehungsinformationen, um eine Vielzahl von bestimmten Bildregionen, die das gewünschte Objekt oder die gewünschte Landmarke enthalten, als beschriftete Trainingsdaten zu extrahieren; und
e) Erzeugen (S6) der Erkennungsinformationen durch Trainieren eines neuronalen Netzwerks, um das gewünschte Objekt oder die gewünschte Landmarke ohne das Beschriftungsobjekt in Bildern zu erkennen, wobei die extrahierte Vielzahl von Bildregionen als beschriftete Trainingsdaten verwendet wird.

2. Verfahren nach Anspruch 1, wobei
die Bilder von mindestens einer Kamera (2) in unterschiedlichen Kamerapositionen in Bezug auf das Beschriftungsobjekt, in unterschiedlichen Kameraausrichtungen in Bezug auf das Beschriftungsobjekt, mit unterschiedlichen Kameraeinstellungen, mit unterschiedlichen Brennweiten und/oder zu unterschiedlichen Zeitpunkten aufgenommen werden.

3. Verfahren nach Anspruch 1 oder 2, wobei
das gewünschte Objekt oder die gewünschte Landmarke und das Beschriftungsobjekt sich in einem Bereich befinden, und die mindestens eine Kamera (2) von einem Roboter oder einem Fahrzeug (1) in dem Bereich bewegt wird.

4. Verfahren nach Anspruch 3, das darüber hinaus folgende Schritte aufweist:
Lokalisieren des Roboters oder des Fahrzeugs (1) in dem Bereich auf der Grundlage der Erkennungsinformationen;
Bestimmen einer Lokalisierungsgenauigkeit des Roboters oder des Fahrzeugs (1);
und mindestens einen der folgenden Schritte:
Wiederholen der Schritte a) bis e), wenn die bestimmte Lokalisierungsgenauigkeit niedriger als eine voreingestellte Mindestgenauigkeit ist; und
Erzeugen eines Signals, das einen Benutzer oder eine Vorrichtung anweist, in dem Bereich ein weiteres Beschriftungsobjekt in der gewissen räumlichen Beziehung zu dem gewünschten Objekt oder der gewünschten Landmarke zu platzieren, wenn die bestimmte Lokalisierungsgenauigkeit niedriger als die voreingestellte Mindestgenauigkeit ist.

5. Verfahren nach Anspruch 4, wobei
in dem Schritt des Bestimmens der Lokalisierungsgenauigkeit eine Region des Bereichs bestimmt wird, in der die bestimmte Lokalisierungsgenauigkeit niedriger als die voreingestellte Mindestgenauigkeit ist;
der Roboter oder das Fahrzeug (1) gesteuert wird, um sich zu der Region zu bewegen, und die Schritte a) bis e) wiederholt werden, nachdem sich der Roboter oder das Fahrzeug (1) innerhalb der Region befindet; und/oder
das Signal den Benutzer oder die Vorrichtung anweist, das andere Beschriftungsobjekt in der Region zu platzieren.

6. Verfahren nach Anspruch 4 oder 5, das darüber hinaus den folgenden Schritt aufweist:
Erzeugen eines Signals, das den Benutzer oder die Vorrichtung anweist, das Beschriftungsobjekt aus dem Bereich oder der Region zu entfernen, wenn die bestimmte Lokalisierungsgenauigkeit nicht niedriger als die voreingestellte Mindestgenauigkeit ist.

7. Verfahren nach einem der vorhergehenden Ansprüche, wobei das Beschriftungsobjekt transportierbar ist und das gewünschte Objekt oder die gewünschte Landmarke unbeweglich ist.

8. Verfahren nach einem der vorhergehenden Ansprüche, wobei
die Beschriftungsobjektinformationen Informationen zum Erkennen (S3) einer Person, die auf etwas zeigt, beinhalten;
die räumlichen Beziehungsinformationen Informationen zum Bestimmen einer Zeigerichtung der Person beinhalten; und
die Bildregion basierend auf der Zeigerichtung bestimmt wird (S5).

9. Verfahren nach einem der vorhergehenden Ansprüche, das darüber hinaus den folgenden Schritt aufweist:
Erhalten von 3D-Informationen, die eine dreidimensionale Position und/oder räumliche Ausdehnung mindestens des Beschriftungsobjekts angeben; wobei
die räumlichen Beziehungsinformationen Informationen zum Bestimmen eines dreidimensionalen Versatzes zwischen dem Beschriftungsobjekt und der Bildregion basierend auf der dreidimensionalen Position und/oder der räumlichen Ausdehnung beinhalten; und
die Bildregion basierend auf dem dreidimensionalen Versatz bestimmt wird (S5).

10. Verfahren nach einem der vorhergehenden Ansprüche, das darüber hinaus den folgenden Schritt aufweist:
Bestimmen (S3) eines Begrenzungsrahmens des erkannten Beschriftungsobjekts, wobei
die räumlichen Beziehungsinformationen Informationen zum Bestimmen (S5) einer Position und/oder Größe der Bildregion basierend auf einer Position und/oder Größe des bestimmten Begrenzungsrahmens beinhalten.

11. Verfahren nach einem der vorhergehenden Ansprüche, wobei
das Beschriftungsobjekt in einer gewissen räumlichen Beziehung zu mehreren gewünschten Objekten oder Landmarken platziert wird;
die räumlichen Beziehungsinformationen die gewisse räumliche Beziehung zu jedem gewünschten Objekt oder jeder gewünschten Landmarke angeben,
die Bildregion für jedes gewünschte Objekt oder jede gewünschte Landmarke bestimmt (S5) wird, so dass mehrere Bildregionen in jedem der erhaltenen Bilder bestimmt werden; und
die Erkennungsinformationen für jedes gewünschte Objekt oder jede gewünschte Landmarke erzeugt werden (S6).

12. Verfahren nach einem der vorhergehenden Ansprüche, wobei
das Beschriftungsobjekt einer aus einer Vielzahl von Objektkategorien zugeordnet wird; und
im Erkennungsschritt (S3) die Objektkategorie bestimmt wird.

13. Verfahren nach Anspruch 12, wobei
die räumlichen Beziehungsinformationen Informationen zum Bestimmen einer Position und/oder Größe der Bildregion basierend auf der bestimmten Objektkategorie beinhalten.

14. Verfahren nach einem der vorhergehenden Ansprüche, wobei
das Beschriftungsobjekt durch YOLO-Objekterkennung erkannt wird.

15. System zum Erzeugen von Erkennungsinformationen zum Erkennen eines gewünschten Objekts oder einer gewünschten Landmarke in einem Bild, das dazu ausgelegt ist, das Verfahren nach einem der Ansprüche 1 bis 14 auszuführen.

## Revendications

1. Procédé, mis en œuvre par ordinateur, de génération d'informations de détection permettant la détection d'un objet ou repère souhaité dans une image, comprenant les étapes suivantes :
a) obtention (S1) d'images comportant l'objet ou repère souhaité et un objet d'étiquetage placé selon une relation spatiale particulière par rapport à l'objet ou repère souhaité ;
b) obtention (S2, S4) d'informations d'objet d'étiquetage permettant la détection de l'objet d'étiquetage dans les images obtenues et d'informations de relation spatiale indiquant la relation spatiale particulière entre une position et une zone de l'objet d'étiquetage dans les images obtenues et une position et une zone de régions d'image comportant l'objet ou repère souhaité dans les images obtenues ;
c) détection (S3), dans chacune des images obtenues, de l'objet d'étiquetage sur la base des informations d'objet d'étiquetage ;
d) détermination (S5), dans chacune des images obtenues, d'une région d'image comportant l'objet ou repère souhaité en utilisant des informations sur une position et une taille de l'objet d'étiquetage détecté dans l'image, et les informations de relation spatiale obtenues afin d'extraire une pluralité de régions d'image déterminées comportant l'objet ou repère souhaité comme données d'entraînement étiquetées ; et
e) génération (S6) des informations de détection par entraînement d'un réseau de neurones afin de détecter l'objet ou repère souhaité sans l'objet d'étiquetage dans des images en utilisant la pluralité extraite de régions d'image comme données d'apprentissage étiquetées.

2. Procédé selon la revendication 1, dans lequel
les images sont obtenues par au moins une caméra (2) à différentes positions de caméra par rapport à l'objet d'étiquetage, selon différentes orientations de caméra par rapport à l'objet d'étiquetage, avec différents réglages de caméra, avec différentes distances focales et/ou à différents instants.

3. Procédé selon la revendication 1 ou 2, dans lequel
l'objet ou repère souhaité et l'objet d'étiquetage sont situés dans une zone et l'au moins une caméra (2) est déplacée par un robot ou un véhicule (1) dans la zone.

4. Procédé selon la revendication 3, comprenant en outre les étapes suivantes :
localisation du robot ou du véhicule (1) dans la zone sur la base des informations de détection ;
détermination d'une précision de localisation du robot ou du véhicule (1) ; et au moins l'une des étapes suivantes
répétition des étapes a) à e) si la précision de localisation déterminée est inférieure à une précision minimale prédéfinie ; et
génération d'un signal donnant instruction à un utilisateur ou à un dispositif de placer, dans la zone, un autre objet d'étiquetage selon la relation spatiale particulière par rapport à un autre objet ou repère souhaité si la précision de localisation déterminée est inférieure à la précision minimale prédéfinie.

5. Procédé selon la revendication 4, dans lequel
à l'étape de détermination de la précision de localisation, une région de la zone où la précision de localisation déterminée est inférieure à la précision minimale prédéfinie est déterminée ;
le robot ou le véhicule (1) est commandé pour se déplacer vers la région et les étapes a) à e) sont répétées une fois que le robot ou le véhicule (1) se trouve à l'intérieur de la région ; et/ou
le signal donne instruction à l'utilisateur ou au dispositif de placer l'autre objet d'étiquetage dans la région.

6. Procédé selon la revendication 4 ou 5, comprenant en outre l'étape suivante :
génération d'un signal donnant instruction à l'utilisateur ou au dispositif de retirer l'objet d'étiquetage de la zone ou de la région si la précision de localisation déterminée n'est pas inférieure à la précision minimale prédéfinie.

7. Procédé selon l'une quelconque des revendications précédentes, dans lequel l'objet d'étiquetage est transportable et l'objet ou repère souhaité est immobile.

8. Procédé selon l'une quelconque des revendications précédentes, dans lequel les informations d'objet d'étiquetage comportent des informations permettant la détection (S3) d'une personne pointant vers quelque chose ;
les informations de relation spatiale comportent des informations permettant la détermination d'une direction de pointage de la personne ; et
la région d'image est déterminée (S5) sur la base de la direction de pointage.

9. Procédé selon l'une quelconque des revendications précédentes, comprenant en outre l'étape suivante :
obtention d'informations 3D indiquant une position tridimensionnelle et/ou une étendue spatiale d'au moins l'objet d'étiquetage ;
les informations de relation spatiale comportant des informations permettant la détermination d'un décalage tridimensionnel entre l'objet d'étiquetage et la région d'image sur la base de la position tridimensionnelle et/ou de l'étendue spatiale ; et
la région d'image étant déterminée (S5) sur la base du décalage tridimensionnel.

10. Procédé selon l'une quelconque des revendications précédentes, comprenant en outre l'étape suivante :
détermination (S3) d'une boîte englobante de l'objet d'étiquetage détecté,
les informations de relation spatiale comportant des informations permettant la détermination (S5) d'une position et/ou d'une taille de la région d'image sur la base d'une position et/ou d'une taille de la boîte englobante déterminée.

11. Procédé selon l'une quelconque des revendications précédentes, dans lequel l'objet d'étiquetage est placé selon une relation spatiale particulière par rapport à plusieurs objets ou repères souhaités ;
les informations de relation spatiale indiquent la relation spatiale particulière par rapport à chaque objet ou repère souhaité,
la région d'image est déterminée (S5) pour chaque objet ou repère souhaité de sorte que plusieurs régions d'image sont déterminées dans chacune des images obtenues ; et
les informations de détection sont générées (S6) pour chaque objet ou repère souhaité.

12. Procédé selon l'une quelconque des revendications précédentes, dans lequel
l'objet d'étiquetage est affecté à l'une d'une pluralité de catégories d'objet ; et
la catégorie d'objet est déterminée à l'étape de détection (S3).

13. Procédé selon la revendication 12, dans lequel
les informations de relation spatiale comportent des informations permettant la détermination d'une position et/ou d'une taille de la région d'image sur la base de la catégorie d'objet déterminée.

14. Procédé selon l'une quelconque des revendications précédentes, dans lequel
l'objet d'étiquetage est détecté par détection d'objets YOLO.

15. Système de génération d'informations de détection permettant la détection d'un objet ou repère souhaité dans une image, configuré pour mettre en œuvre le procédé selon l'une quelconque des revendications 1 à 14.
